# EUROPÄISCHE PATENTSCHRIFT

(11) **EP 0 980 638 B1**
(45) Veröffentlichungstag und Bekanntmachung des Hinweises auf die Patenterteilung: **28.07.2004**
(21) Anmeldenummer: 98931963.7
(22) Anmeldetag: 21.04.1998
(51) Int. Cl.: H04Q 11/04, H04M 3/22

(54) **VERFAHREN UND ANORDNUNG ZUR NETZWEITEN ANALYSE VON VERBINDUNGEN IN TELEKOMMUNIKATIONSNETZEN**
METHOD AND DEVICE FOR NETWORK-WIDE CONNECTION ANALYSIS ON A TELECOMMUNICATION NETWORK
PROCEDE ET DISPOSITIF D'ANALYSE DES CONNEXIONS D'UN RESEAU DE TELECOMMUNICATION A L'ECHELLE DE CE DERNIER

(30) Priorität: 07.05.1997 DE 19719447
(43) Veröffentlichungstag der Anmeldung: 23.02.2000
(73) Patentinhaber: SIEMENS AKTIENGESELLSCHAFT, 80333 München (DE)
(72) Erfinder: KOFLER, Christian, D-81369 München (DE); TAPPERT, Ludger, D-81539 München (DE)
(86) Internationale Anmeldenummer: PCT/DE1998/001110
(87) Internationale Veröffentlichungsnummer: WO 1998/051061

(56) Entgegenhaltungen:
- EP-A- 0 589 248
- EP-A- 0 661 859
- WO-A-98/09420
- US-A- 5 430 708
- KUO-JAY CHI: "ISDN-PAS: AN ISDN PERFORMANCE ANALYSIS SYSTEM" PROCEEDINGS OF THE REGION 10 CONFERENCE ON COMPUTER AND COMMUNICATI SYSTEMS (TENCON), HONG KONG, 24 - 27 SEPT., 1990, Bd. 2, 24. September 1990, Seiten 865-868, XP000235993 INSTITUTE OF ELECTRICAL AND ELECTRONICS ENGINEERS

## Beschreibung

Die vorliegende Erfindung bezieht sich auf ein Verfahren und eine Anordnung zur netzweiten Analyse von Verbindungen in Telekommunikationsnetzen, in denen eine Verbindung über wenigstens einen Knoten eines Netzes hergestellt wird.

Ein Beispiel für einen aktuellen Standard für Telekommunikationsnetze ist das sogenannte ISDN (Digitales Netz für integrierte Dienste), mit dem viele Dienste über dasselbe Netz betrieben werden können. Gemäß dem ISDN-Standard SO werden die Nutzinformationen über zwei Basiskanäle (B-Kanäle) in beiden Richtungen mit 64 Kilobit/Sekunde übertragen. Neben den beiden Basiskanälen zur Nutzinformations-Übermittlung ist ein Steuerkanal (D-Kanal) mit 16 Kilobit/Sekunde vorhanden. Bei ISDN erfolgt im Gegensatz zum herkömmlichen Fernsprechnetz der Verbindungsaufbau von einem Punkt A zu einem Punkt B über einen getrennten Steuerkanal, nämlich dem D-Kanal. Ein Endgerät und eine Vermittlungsstelle kommunizieren miteinander über die Art und Weise des Zeichengabeaustausches mit Hilfe des D-Kanal-Protokolls. Als Folge entstehen im Endgerät und in der Vermittlungsstelle Funktionsabläufe, die zu Zustandsänderungen führen. Die Vermittlungsprozesse werden durch Programme bzw. Prozeduren gesteuert. Die Parameterübergabe erfolgt z.B. durch eine gesicherte Schicht-2-Übertragung von Nachrichten-Elementen (Informationselementen) im Schicht-3-Datenformat.

Die obigen Übertragungsraten sind nur als Beispiel genannt, Bedeutung für die vorliegende Erfindung hat nur die Aufteilung in B- und D-Kanäle.

Zur Funktions- und Datenanalyse von ISDN-Verbindungen benötigt man Protokoll-Analysatoren, die die Informationen zu den einzelnen Schichten des CCITT-Kommunikationsmodells darstellen.

Es ist bekannt, durch ein sogenanntes "Tracing" lokal Verbindungen zu analysieren und verbindungsspezifische, leitungsoder knotenbezogene Daten zu sammeln. Indessen sind die genannten Analysedaten immer nur lokale Daten, d.h. Daten, die den Verbindungsabschnitt zwischen zwei Knoten des Netzes betreffen. Gemäß dem Stand der Technik muß daher zur Gesamt-Analyse einer Verbindung in einem Telekommunikationsnetz, die sich über mehrere Knoten, Nebenstellenanlagen und evtl. sogar über mehrere Carrier-Netze erstreckt, ein Servicemann jeden Verbindungsabschnitt zwischen den einzelnen Nebenstellenanlagen, Carrier-Netzen oder Knoten überprüfen, um die gesamte Verbindung analysieren zu können.

Alternativ kann gemäß dem Stand der Technik mittels eines Modems jeder einzelne Knoten bzw. jede einzelne Nebenstellenanlage der Verbindung angewählt werden, wodurch von jedem Knoten bzw. jeder Nebenstellenanlage einzeln die lokalen Daten, d.h. jeweils nur bezüglich den jeweiligen Knoten bzw. die Nebenstellenanlage erhalten werden können.

Bei Bedarf werden die gesammelten Daten im Labor für weitere Untersuchungen simuliert und nachgestellt.

Es ist offensichtlich, daß es einen hohen Zeit- und Kostenaufwand erfordert, zur Gesamt-Analyse einer netzweiten Verbindung, die sich über mehrere Knoten oder Nebenstellenanlagen erstreckt, jeden Verbindungsabschnitt zwischen zwei Knoten einzeln zu analysieren und dann die einzelnen lokalen Daten zu sammeln.

Bei den bekannten Telekommunikationsnetzen besteht also das Problem, bei im Betrieb befindlichen vernetzten Telekommunikationsanlagen netzweite Verbindungen "remote" (zentral) zu analysieren und verbindungsspezifische, leitungs- oder knotenbezogene Daten "remote" zu sammeln. Dieses Problem besteht insbesondere dann, wenn sich die Verbindung über mehrere Transit-Nebenstellenanlagen (PBX) erstreckt.

Aus der europäischen Offenlegungsschrift EP-A-0 661 859 ist beispielsweise ein System bekannt, bei dem eine Verbindung zwischen zwei Prüfstationen über ein Netzwerk aufgebaut wird. Verbindungs- und Übertragungsstationen werden in den Prüfstationen registriert und anschließend an einen zentralen Rechner zur Auswertung weitergeleitet.

Es ist Aufgabe der vorliegenden Erfindung, ein alternatives Verfahren bzw. eine alternative Anordnung zu schaffen, das bzw. die eine netzweite Analyse von Verbindungen in Telekommunikationsnetzen über einen einzelnen Knoten hinaus ermöglicht.

Gemäß der Erfindung ist dazu ein Verfahren zur netzweiten Analyse von Verbindungen in Telekommunikationsnetzen vorgesehen, gemäß dem eine Verbindung von einem Punkt A zu einem Punkt B über wenigstens einen Knoten eines Netzes aufgebaut wird. Dann wird ein Abfragebefehl von einem Abfragepunkt des Netzes an die an der Verbindung beteiligten Knoten übermittelt. Als Antwort auf den Abfragebefehl übermittelt dann wenigstens einer der an der Verbindung beteiligten Knoten des Netzes Verbindungsdaten betreffend jeweils einen Knoten des Netzes an einen Empfänger.

Insbesondere kann der Abfragebefehl von dem Punkt A aus übermittelt werden, von dem aus die Verbindung aufgebaut wird.

Die Verbindungsdaten von dem wenigstens einen Knoten können zu dem Punkt A, von dem die Verbindung aus aufgebaut wird, als Empfängerpunkt übermittelt werden.

Insbesondere kann der Abfragebefehl beim Aufbau der Verbindung automatisch mit übermittelt werden.

Beispielsweise kann die Übermittlung gemäß dem ISDN-Standard erfolgen, wobei der Abfragebefehl in dem D-Kanal des ISDN-Standards übermittelt werden kann. Die Übermittlung kann aber auch gemäß jedem anderen Standard erfolgen, bei dem die Möglichkeit einer internen Kommunikation von Nebenstellenanlagen gegeben ist.

Der Abfragebefehl kann insbesondere als sogenanntes Informationselement des D-Kanal-Protokolls des ISDN-Standards übermittelt werden.

Alternativ kann der Abfragebefehl in dem wenigstens einen Knoten die Übermittlung von Verbindungsdaten an den Empfängerpunkt aktivieren.

Der Abfragebefehl kann in Rahmen einer Nachricht zur internen Kommunikation von Nebenstellenanlagen übermittelt werden. Dabei kann es sich neben dem ISDN-Standard wahlweise auch um ein frei definiertes Privatnetz-Protokoll handeln.

Der Abfragebefehl kann über mehrere Knoten der Verbindung übermittelt werden, wobei die mehreren Knoten dann sämtlich die sie betreffenden Verbindungsdaten an denselben Empfängerpunkt übermitteln.

Die Verbindungsdaten können Informationen hinsichtlich der angrenzenden Knoten, der Namen der Knoten und/oder einer Rufnummernmodifikation enthalten.

Gemäß einem weiteren Aspekt der Erfindung ist eine Anordnung zur netzweiten Analyse von Verbindungen in Telekommunikationsnetzen vorgesehen. Die Anordnung weist dabei eine Verbindungsleitung von einem Punkt A zu einem Punkt B über wenigstens einen Knoten des Netzes hinweg auf. In dem Netz ist ein Abfragepunkt vorgesehen, an dem eine Einrichtung zur Übermittlung eines Abfragebefehl an die an der Verbindung beteiligten Knoten vorgesehen ist. Weiterhin ist ein Empfängerpunkt des Netzes vorgesehen, an dem eine Einrichtung zum Empfang von Verbindungsdaten betreffend jeweils einen Knoten des Netzes von einem oder mehreren Knoten des Netzes als Antwort auf den Abfragebefehl vorgesehen ist.

Der Abfragepunkt des Netzes kann der Punkt A sein, an dem die Verbindungsleitung beginnt.

Der Empfängerpunkt kann an dem Punkt A des Netzes vorgesehen sein, an dem die Verbindungsleitung beginnt.

Die Einrichtung zur Übermittlung des Abfragebefehls kann den Abfragebefehl beim Aufbau der Verbindung automatisch mit übermitteln.

Der Abfragebefehl kann als ein Informationselement des D-Kanals des ISDN-Standards vorgesehen sein.

Der Abfragebefehl kann so aufgebaut sein, daß er in dem wenigstens einen Knoten die Übermittlung der Verbindungsdaten aktiviert.

Die Verbindungsleitung kann mehrere Knoten aufweisen, die sämtlich den Abfragebefehl erhalten und jeweils die sie betreffenden Verbindungsdaten an dieselbe Einrichtung zum Empfang der Verbindungsdaten übermitteln.

Die Verbindungsdaten können Informationen hinsichtlich der angrenzenden Knoten, der Namen der Knoten und/oder einer Rufnummernmodifikation aufweisen.

Weitere Vorteile und Merkmale der Erfindung werden nun anhand von Ausführungsbeispielen und bezugnehmend auf die begleitenden Figuren näher erläutert. Es zeigen:
Figur 1 eine erfindungsgemäße Anordnung zur netzweiten Analyse von Verbindungen in Telekommunikationsnetzen, und
Figur 2 eine erfindungsgemäße Anordnung gemäß einem zweiten Ausführungsbeispiel der Erfindung.

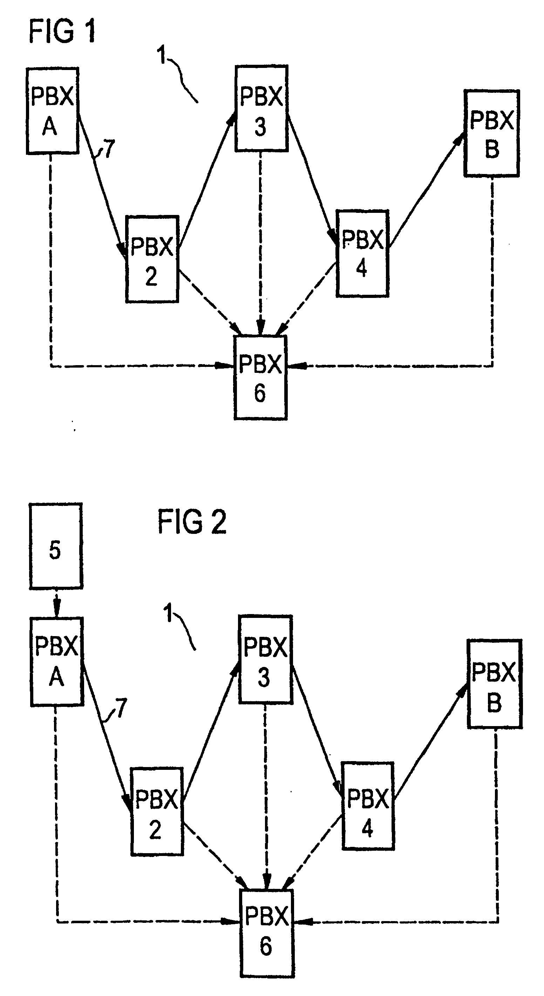

In Figur 1 ist ein Telekommunikationsnetz 1 gezeigt, das durch mehrere Nebenstellenanlagen PBX A, 2, 3, 4, 6, B gebildet wird. Diese Nebenstellenanlagen PBX stellen Knotenpunkte des Netzes 1 dar. Alternativ kann das Netz 1 auch verschiedene Träger (Carrier) aufweisen. Unter der Bezeichnung "Knoten" oder "Transitknoten" im Sinne der vorliegenden Beschreibung soll daher beispielsweise eine Nebenstellenanlage PBX oder ein Verbindungspunkt zwischen verschiedenen Carrier-Netzen verstanden werden.

In Figur 1 ist durch die durchgezogenen Pfeile eine aufgebaute Verbindung 7 in dem Netz 1 dargestellt. Diese Verbindung 7 wird ausgehend von der Nebenstellenanlage PBX A aufgebaut. Wie ersichtlich ist der Endpunkt der Verbindung 7 der Knoten der Nebenstellenanlage PBX B. Die Verbindung 7 erstreckt sich dabei nicht direkt von der Nebenstellenanlage PBX A zu der Nebenstellenanlage PBX B, sondern sie erstreckt sich über mehrere Transitknoten des Netzes 1. Im dargestellten Fall erstreckt sich die Verbindungsleitung 7 über die Nebenstellenanlagen PBX 2, PBX 3 und PBX 4 als Transitknoten.

Verbindungsdaten, beispielsweise eine Rufnummernmodifikation in den einzelnen Knoten, die Namen der Transitknoten, der Meldungsverkehr in einem Knoten, welcher Knoten mit welchem Knoten über welche Leitung verbunden ist, welche Parameter in den einzelnen Knoten gesetzt sind usw. sind bekannterweise in jdem der mehreren Knoten jeweils nur lokal verfügbar. Das heißt, daß beispielsweise der Knoten der Nebenstellenanlage PBX 3 nur über Informationsdaten betreffend den Verbindungsabschnitt zu den angrenzenden Knoten verfügt , d.h. in dem Knoten der Nebenstellenanlage PBX 3 sind Daten verfügbar, die den Verbindungsabschnitt zwischen dem Knoten der Nebenstellenanlage PBX 2 und dem Knoten PBX 3 betreffen, sowie Daten, die in Verbindungsabschnitten zwischen dem Knoten der Nebenstellenanlage PBX 3 und dem Knoten der Nebenstellenanlage PBX 4 betreffen. Gleiches gilt natürlich für die übrigen Nebenstellenanlagen hinsichtlich der angrenzenden Verbindungsabschnitte.

Erfindungsgemäß sind nun die einzelnen lokalen verbindungsdaten der einzelnen Nebenstellenanlagen des Netzes 1 an einem Empfängerpunkt, z.B. dem Knoten der Nebenstellenanlage 6 verfügbar. Dazu werden die einzelnen lokalen Verbindungsdaten der jeweiligen Nebenstellenanlagen an den Knoten der Nebenstellenanlage 6 als Empfängerpunkt gesendet und sind somit dort zentral verfügbar und analysierbar. An dem Empfängerpunkt ist dazu eine Einrichtung zum Empfang der Verbindungsdaten vorgesehen. Gemäß der Erfindung sind somit an dem Empfängerpunkt, nämlich dem Knoten der Nebenstellenanlage PBX 6, Verbindungsdaten hinsichtlich aller die Verbindung 7 bildenden verbindungsabschnitte verfügbar, so daß nun die gesamte Verbindung 7 an einem zentralen Punkt, nämlich dem Empfängerpunkt des Knotens der Nebenstellenanlage 6 insgesamt verfügbar und auswertbar ist. Somit kann eine schnelle zentrale Diagnose zur Netz- oder Fehleranalyse an einem zentralen Punkt ausgeführt werden.

Um die einzelnen Knoten der Nebenstellenanlagen zu veranlassen, jeweils ihre lokalen Verbindungsdaten an einen bestimmten Empfängerpunkt PBX 6 zu senden, wird gemäß dem Ausführungsbeispiel von Figur 1 beim Aufbau der Verbindung ausgehend von dem Knoten der Nebenstellenanlage PBX A ein Abfragebefehl mit übermittelt. Wenn eine Verbindung gemäß dem ISDN-Standard aufgebaut wird, kann dieser Abfragebefehl im Rahmen eines frei definierbaren Informationselementes des sogenannten D-Kanal-Protokolls des ISDN-Standards übertragen werden. Wie bekannt sind in dem D-Kanal-Protokoll gemäß dem ISDN-Standard eine Anzahl an Informationselementen vorgesehen, von denen einige fest belegt sind, um beispielsweise bestimmte Sperren zu aktivieren oder deaktivieren, und wobei einige Informationselemente (IE) frei definierbar sind. Ein solches frei definierbares Informationselement (IE) kann also erfindungsgemäß den Abfragebefehl enthalten.

Die Informationselemente können auch weitergehende Funktionen aufweisen. Die Informationen können beispielsweise kleine Prozeduren enthalten, die ein gezieltes Auslesen von Daten veranlassen, wobei dieses Auslesen bei der Installation des Systems noch nicht vorgesehen sein müssen, sondern erst durch die Testroutinen der Prozeduren der Informationselemente im Sinne einer nachträglichen Erweiterung geschaffen werden.

Es ist anzumerken, daß der ISDN-Standard nur als Beispiel genannt wird, und andere Standards, wie beispielsweise private frei definierbare Standards sogar den Vorteil bieten können, je nach Anwendungsfall frei definierbare Befehle in Form von Information- oder Nachrichtenelementen übermitteln zu können.

Im Rahmen dieses Informationselementes wird also den durchlaufenden Knoten in Form der Nebenstellenanlage PBX mitgeteilt, daß sie ihre lokal verfügbaren Daten, die z.B. mit dem entsprechenden Verbindungsabschnitt zusammenhängen, zu sammeln haben und diese an eine bestimmte Adresse des Telekommunikationsnetzes 1 schicken sollen. Gemäß dem D-Kanal-Protokoll des ISDN-Standards kann also der Abfragebefehl im Rahmen eines zusätzlichen Informationselementes mit der üblichen Setup-Nachricht mitgeschickt werden, wobei der Abfragebefehl beispielsweise festlegt, daß in den Transitknoten (PBX) alle ein- und ausgehenden Nachrichten, die zu dieser Verbindung bzw. dem Verbindungsabschnitt gehören, in den Nebenstellenanlagen lokal gespeichert werden und dann anschließend an einen festgelegten gemeinsamen Empfängerpunkt, im dargestellten Fall die Nebenstellenanlage 6 des Netzes 1 mittels einer Datenübertragung verschickt werden.

Als Alternative zu dem oben genannten Abfragebefehl im Rahmen eines Informationselementes des D-Kanal-Protokolls des ISDN-Standards kann der Abfragebefehl auch folgende Funktion auslösen: Bereits vor dem Aufbau einer Verbindungsleitung 7 in dem Netz 1 wird in den Knoten der einzelnen Nebenstellenanlagen PBX eine sogenannte "Remote"-Funktion (Zentralabfrage-Funktion) programmiert. In einem solchen Fall muß dann nur noch ein Abfragebefehl an die einzelnen Knoten in Form der Nebenstellenanlagen PBX gesendet werden, der die sogenannte "Remote"-Funktion aktiviert.

Gemäß dem ersten Ausführungsbeispiel wird also der Abfragebefehl beispielsweise automatisch mit dem Verbindungsaufbau ausgehend von dem Knoten der Nebenstellenanlage PBX A mit übermittelt.

In Figur 2 ist ein weiteres Ausführungsbeispiel einer erfindungsgemäßen Anordnung zur netzweiten Analyse von Verbindungen in Telekommunikationsnetzen dargestellt. Wie in Figur 2 ersichtlich, unterscheidet sich das zweite Ausführungsbeispiel von dem ersten Ausführungsbeispiel, das in Figur 1 dargestellt ist, im wesentlichen dadurch, daß die Absendung des Abfragebefehls nicht automatisch mit dem Verbindungsaufbau von dem Knoten der Nebenstellenanlage PBX A erfolgt, so daß vielmehr ein externer Abfrage-Punkt 5 vorgesehen ist, d.h. ein Punkt an dem eine Übermittlungs-Einrichtung vorgesehen ist, die das Abschicken des Abfragebefehls von einem Knoten des Netzes 1 aus anweist bzw. diesen Abfragebefehl selbst an einen Knoten des Netzes 1 sendet, so daß er von diesem Knoten aus an alle übrigen Knoten des Netzes 1 übermitteln kann. Im in Figur 2 dargestellten Beispiel weist die Einrichtung in dem Abfragepunkt 5 den Knoten der Nebenstellenanlage PBX A an, den Abfragebefehl über die Leitung 7 abzuschicken.

In den Figuren ist der Fall dargestellt, daß der Empfängerpunkt, also der Punkt, an dem die einzelnen lokalen Verbindungsdaten der jeweiligen Knoten der Nebenstellenanlagen PBX gesendet werden, nicht Bestandteil der Verbindung 7 ist. Indessen ist es auch möglich, daß der Empfängerpunkt der Knoten der Nebenstellenanlage PBX A ist, von dem aus die Verbindung 7 aufgebaut wird. Das bedeutet, von dem Knoten der Nebenstellenanlage PBX A aus wird automatisch mit dem Aufbau der Verbindung 7 der Abfragebefehl an die durchlaufenen Knoten übermittelt. Danach übermitteln die jeweiligen Knoten der Verbindung 7 ihre jeweiligen lokalen Verbindungsdaten an den Knoten der Nebenstellenanlage PBX A, von dem aus die Verbindung 7 aufgebaut wurde. Somit kann die Verbindung an dem Punkt analysiert werden, von dem sie aufgebaut wurde.

Durch die Erfindung wird also eine Möglichkeit zur netzweiten Mitverfolgung eines Verbindungsaufbaus oder -abbaus geschaffen, was automatisch erfolgen kann, um so schnell Diagnosedaten zur Netz- oder Fehleranalyse zu gewinnen. Der Aufwand zur Wartung und Analyse von Telekommunikationsnetzen wird somit verringert.

## Patentansprüche

1. Verfahren zur netzweiten Analyse von Verbindungen in Telekommunikationsnetzen,
mit folgenden Schritten:
- Aufbau einer Verbindung (7) von einem Punkt A zu einem Punkt B über wenigstens einen Knoten (2,3,4) des Netzes (1),
- Übermittlung eines Abfragebefehls von einem Abfrage-Punkt (5) des Netzes (1) an die an der Verbindung beteiligten Knoten (2,3,4), und
- Übermittlung von verbindungsdaten betreffend jeweils einen oben spezifizierten Knoten (2,3,4) des Netzes (1) von einem oder mehreren, der oben spezifizierten Knoten (2,3,4) des Netzes (1) an einen Empfängerpunkt (6) als Antwort auf den Abfragebefehl.

2. Verfahren nach Anspruch 1,
bei dem der Abfragebefehl von dem Punkt A aus übermittelt wird, von dem aus die Verbindung (7) aufgebaut wird.

3. Verfahren nach Anspruch 1 oder 2,
bei dem die Verbindungsdaten zu dem Punkt A, von dem die Verbindung (7) aus aufgebaut wird, als Empfängerpunkt (6) übermittelt werden.

4. Verfahren nach einem der vorhergehenden Ansprüche,
bei dem der Abfragebefehl beim Aufbau der Verbindung (7) automatisch mit übermittelt wird.

5. Verfahren nach einem der vorhergehenden Ansprüche,
bei dem gemäß dem ISDN-Standard übermittelt wird und der Abfragebefehl in dem D-Kanal des ISDN-Standards übermittelt wird.

6. Verfahren nach Anspruch 5,
bei dem der Abfragebefehl als ein Informationselement des D-Kanal-Protokolls des ISDN-Standards übermittelt wird.

7. Verfahren nach Anspruch 6,
bei dem das Informationselement Abfrageprozeduren enthält.

8. Verfahren nach Anspruch 5,
bei dem der Abfragebefehl in dem wenigstens einen Knoten (2,3,4) die Übermittlung der Verbindungsdaten an den Empfängerpunkt (6) aktiviert.

9. Verfahren nach Anspruch 5,
bei dem der Abfragebefehl im Rahmen einer Nachricht zur internen Kommunikation von Nebenstellenanlagen (PBX) übermittelt wird.

10. Verfahren nach einem der vorhergehenden Ansprüche,
bei dem der Abfragebefehl über mehrere Knoten (2,3,4) der Verbindung (7) übermittelt wird, die sämtlich die jeweils sie betreffenden Verbindungsdaten an denselben Empfängerpunkt (6) übermitteln.

11. Verfahren nach einem der vorhergehenden Ansprüche,
bei dem die Verbindungsdaten Informationen hinsichtlich der angrenzenden Knoten, der Namen der Knoten und/oder einer Rufnummernmodifikation enthalten.

12. Anordnung zur netzweiten Analyse von Verbindungen in Telekommunikationsnetzen,
aufweisend:
- eine Verbindungsleitung (7) von einem Punkt A zu einem Punkt B über wenigstens einen Knoten (2,3,4) des Netzes (1),
- einen Abfrage-Punkt (5) des Netzes (1), an dem eine Einrichtung zur Übermittlung eines Abfragebefehls an die an der Verbindung (7) beteiligten Knoten (2,3,4) vorgesehen ist, und
- eine Empfängerpunkt (6) des Netzes (1), an dem eine Einrichtung zum Empfang von Verbindungsdaten betreffend jeweils einen Knoten (2,3,4) des Netzes (1) von einem oder mehreren Knoten (2,3,4) des Netzes (1) als Antwort auf den Abfragebefehl vorgesehen ist.

13. Anordnung nach Anspruch 12,
**dadurch gekennzeichnet,**
**daß** der Abfrage-Punkt (5) des Netzes der Punkt A ist, an dem die Verbindungsleitung (7) beginnt.

14. Anordnung nach Anspruch 12,
**dadurch gekennzeichnet,**
**daß** der Empfängerpunkt (6) an dem Punkt A des Netzes (1) vorgesehen ist, an dem die Verbindungsleitung beginnt.

15. Anordnung nach einem der Ansprüche 12 bis 14,
**dadurch gekennzeichnet,**
**daß** die Einrichtung zur Übermittlung des Abfragebefehls den Abfragebefehl beim Aufbau der Verbindung automatisch mit übermittelt.

16. Anordnung nach einem der Ansprüche 12 bis 15,
**dadurch gekennzeichnet,**
**daß** der Abfragebefehl ein Informationselement des D-Kanal-Protokolls des ISDN-Standards ist.

17. Anordnung nach Anspruch 16,
bei dem das Informationselement Abfrageprozeduren enthält.

18. Anordnung nach einem der Ansprüche 12 bis 15,
**dadurch gekennzeichnet,**
**daß** der Abfragebefehl so aufgebaut ist, daß er in dem wenigstens einen Knoten (2,3,4) die Übermittlung der Verbindungsdaten aktiviert.

19. Anordnung nach einem der Ansprüche 12 bis 17,
**dadurch gekennzeichnet,**
**daß** die Verbindungsleitung (7) mehrere Transitknoten (2,3,4) aufweist, die sämtlich den Abfragebefehl erhalten und jeweils sie betreffenden Verbindungsdaten an dieselbe Einrichtung zum Empfang der Verbindungsdaten übermitteln.

20. Anordnung nach einem der Ansprüche 12 bis 19,
**dadurch gekennzeichnet,**
**daß** die Verbindungsdaten Informationen hinsichtlich der angrenzenden Knoten (2,3,4), der Namen der Knoten und/oder einer Rufnummernmodifikation aufweisen.

## Claims

1. Method for network-wide connection analysis in telecommunication networks,
with the following stages:
- setting up of a connection (7) from a point A to a point B via at least one node (2,3,4) of the network (1),
- transmission of an inquiry command from an inquiry point (5) of the network (1) to the nodes (2,3,4,) involved in the connection, and
- transmission of connection data relating in each instance to one of the nodes (2,3,4) of the network (1) as specified above from one or a plurality of nodes (2,3,4) of the network (1) as specified above to a receiver point (6) in response to the inquiry command.

2. Method according to Claim 1,
in which the inquiry command is transmitted from the point A, from which the connection (7) is set up.

3. Method according to Claim 1 or 2,
in which the connection data is transmitted to the point A, from which the connection (7) is set up, as the receiver point (6).

4. Method according to one of the preceding Claims,
in which the inquiry command is transmitted automatically as the connection (7) is being set up.

5. Method according to one of the preceding Claims,
in which transmission takes place according to the ISDN standard and the inquiry command is transmitted in the D channel of the ISDN standard.

6. Method according to Claim 5,
in which the inquiry command is transmitted as an information element of the D channel protocol of the ISDN standard.

7. Method according to Claim 6,
in which the information element contains inquiry procedures.

8. Method according to Claim 5,
in which the inquiry command activates transmission of the connection data to the receiver point (6) in the at least one node (2,3,4).

9. Method according to Claim 5,
in which the inquiry command is transmitted in the context of a message for internal communication by private branch exchanges (PBX).

10. Method according to one of the preceding Claims,
in which the inquiry command is transmitted via a plurality of nodes (2,3,4) of the connection (7), all of which transmit the connection data relating to themselves to the same receiver point (6).

11. Method according to one of the preceding Claims,
in which the connection data contains information relating to the adjacent nodes, the names of the nodes and/or a call number modification.

12. Device for network-wide connection analysis in telecommunication networks,
comprising:
- a connection line (7) from a point A to a point B via at least one node (2,3,4) of the network (1),
- an inquiry point (5) of the network (1), at which a device is provided for transmitting an inquiry command to the nodes (2,3,4) involved in the connection (7), and
- a receiver point (6) of the network (1), at which a device is provided for receiving connection data relating in each instance to one node (2,3,4) of the network (1) from one or a plurality of nodes (2,3,4) of the network (1) in response to the inquiry command.

13. Device according to Claim 12,
**characterized in that**
the inquiry point (5) of the network is the point A, at which the connection line (7) starts.

14. Device according to Claim 12,
**characterized in that**
the receiver point (6) is provided at the point A of the network (1), at which the connection line starts.

15. Device according to one of Claims 12 to 14,
**characterized in that**
the device for transmitting the inquiry command transmits the inquiry command automatically as the connection is being set up.

16. Device according to one of Claims 12 to 15,
**characterized in that**
the inquiry command is an information element of the D channel protocol of the ISDN standard.

17. Device according to Claim 16,
in which the information element contains inquiry procedures.

18. Device according to one of Claims 12 to 15,
**characterized in that**
the inquiry command is set up so that it activates transmission of the connection data in the at least one node (2,3,4).

19. Device according to one of Claims 12 to 17,
**characterized in that**
the connection line (7) comprises a plurality of transit nodes (2,3,4), all of which receive the inquiry command and each of which transmits the connection data relating to itself to the same device for receiving connection data.

20. Device according to one of Claims 12 to 19,
**characterized in that**
the connection data comprises information relating to the adjacent nodes (2,3,4), the names of the nodes and/or a call number modification.

## Revendications

1. Procédé d'analyse de connexions de réseaux de télécommunication à l'échelle de ces derniers, comprenant les étapes suivantes:
- établissement d'une connexion (7) d'un point A vers un point B en passant par au moins un noeud (2, 3, 4) du réseau (1),
- transmission d'une instruction d'interrogation par un point d'interrogation (5) du réseau (1) aux noeuds (2, 3, 4) participant à la connexion et
- transmission de données de connexion concernant respectivement un noeud (2, 3, 4) spécifié ci-avant du réseau (1) par un ou plusieurs des noeuds (2, 3, 4) spécifiés ci-avant du réseau (1) à un point récepteur (6) en réponse à l'instruction d'interrogation.

2. Procédé selon la revendication 1, dans lequel l'instruction d'interrogation est transmise au départ du point A, au départ duquel est établie la connexion (7).

3. Procédé selon la revendication 1 ou 2, dans lequel les données de connexion sont transmises vers le point A, au départ duquel est établie la connexion (7), en tant que point récepteur (6).

4. Procédé selon l'une des revendications précédentes, dans lequel l'instruction d'interrogation est co-transmise automatiquement lors de l'établissement de la connexion (7).

5. Procédé selon l'une des revendications précédentes, dans lequel la transmission se fait selon la norme RNIS et dans lequel l'instruction d'interrogation est transmise dans le canal D de la norme RNIS.

6. Procédé selon la revendication 5, dans lequel l'instruction d'interrogation est transmise en tant qu'un élément d'information du protocole de canal D de la norme RNIS.

7. Procédé selon la revendication 6, dans lequel l'élément d'information contient des procédures d'interrogation.

8. Procédé selon la revendication 5, dans lequel l'instruction d'interrogation active, dans l'au moins un noeud (2, 3, 4), la transmission des données de connexion au point récepteur (6).

9. Procédé selon la revendication 5, dans lequel l'instruction d'interrogation est transmise dans le cadre d'un message pour la communication interne d'installations avec postes supplémentaires (PBX).

10. Procédé selon l'une des revendications précédentes, dans lequel l'instruction d'interrogation est transmise sur plusieurs noeuds (2, 3, 4) de la connexion (7) qui transmettent tous au même point récepteur (6) les données de connexion les concernant respectivement.

11. Procédé selon l'une des revendications précédentes, dans lequel les données de connexion contiennent des informations concernant les noeuds adjacents, les noms des noeuds et/ou une modification de numéros d'appel.

12. Dispositif d'analyse de connexions de réseaux de télécommunication à l'échelle de ces derniers, présentant:
- une ligne de connexion (7) d'un point A vers un point B passant par au moins un noeud (2, 3, 4) du réseau (1),
- un point d'interrogation (5) du réseau (1) sur lequel est prévu un dispositif de transmission d'une instruction d'interrogation aux noeuds (2, 3, 4) participant à la connexion (7) et
- un point récepteur (6) du réseau (1) en lequel est prévu un dispositif de réception de données de connexion concernant respectivement un noeud (2, 3, 4) du réseau (1) et venant d'un ou de plusieurs noeuds (2, 3, 4) du réseau (1) en réponse à l'instruction d'interrogation.

13. Dispositif selon la revendication 12, **caractérisé en ce que** le point d'interrogation (5) du réseau est le point A en lequel commence la ligne de connexion (7).

14. Dispositif selon la revendication 12, **caractérisé en ce que** le point récepteur (6) est prévu sur le point A du réseau (1) en lequel commence la ligne de connexion.

15. Dispositif selon l'une des revendications 12 à 14, **caractérisé en ce que** le dispositif de transmission de l'instruction d'interrogation co-transmet automatiquement l'instruction d'interrogation lors de l'établissement de la connexion.

16. Dispositif selon l'une des revendications 12 à 15, **caractérisé en ce que** l'instruction d'interrogation est un élément d'information du protocole de canal D de la norme RNIS.

17. Dispositif selon la revendication 16, dans lequel l'élément d'information contient des procédures d'interrogation.

18. Dispositif selon l'une des revendications 12 à 15, **caractérisé en ce que** l'instruction d'interrogation est structurée de telle manière que ladite instruction d'interrogation active la transmission des données de connexion dans l'au moins un noeud (2, 3, 4).

19. Dispositif selon l'une des revendications 12 à 17, **caractérisé en ce que** la ligne de connexion (7) présente plusieurs noeuds de transit (2, 3, 4) qui reçoivent tous l'instruction d'interrogation et transmettent respectivement les données de connexion les concernant au même dispositif de réception des données de connexion.

20. Dispositif selon l'une des revendications 12 à 19, **caractérisé en ce que** les données de connexion présentent des informations concernant les noeuds (2, 3, 4) adjacents, les noms des noeuds et/ou une modification de numéros d'appel.
